# EUROPEAN PATENT SPECIFICATION

(11) **EP 1 132 221 B1**
(45) Date of publication and mention of the grant of the patent: **04.05.2005**
(21) Application number: 01101346.3
(22) Date of filing: 22.01.2001
(51) Int. Cl.: B60C 27/10, B60C 27/12, B60C 27/14

(54) **Cable for anti-return device particulary for anti-skid devices**
Kabel für rücklaufgesicherte Vorrichtung, insbesondere für Gleitschutzvorrichtung
Cable pour dispositif anti-retour en particulier pour dispositif anti-dérapage

(30) Priority: 22.02.2000 IT MI200323
(43) Date of publication of application: 12.09.2001
(73) Proprietor: König S.p.A., 23847 Molteno (Lecco) (IT)
(72) Inventor: Airoldi, Romolo, 23900 Lecco (IT); Arrigoni Neri, Marco, 23811 Ballabio (Lecco) (IT)
(74) Representative: Petruzziello, Aldo

(56) References cited:
- US-A- 4 466 160
- US-A- 5 056 206
- US-A- 5 056 574

## Description

The present invention refers to a cable for an anti-return device particularly for anti-skid devices, commonly known as snow chains.

Snow chains, generally mounted on the driving wheels of a vehicle, increase the friction on the tread by biting into the snow and/or ice deposited on the road surface , allowing good grip by the tires of the vehicle.

As is known, a snow chain generally consists of two lateral elements (chains, flexible cables, steel wires, ropes or the like), which in conditions of use are closed in a ring on the inner side and on the outer side of the wheel, respectively. These lateral elements are connected by a series of portions of chain variously arranged to achieve friction on the tread and the whole is completed by a device for tensioning said elements, known by the name of tensioner.

Commonly used tensioning device provide for one end of the outer ring element of the snow chains to be hooked to an anti-return block and the other end comprises a free terminal portion formed by a cable. This cable is passed through the anti-return device which allows it to be pulled in one direction and prevents sliding in the opposite direction. In this manner, by pulling the cable, it is possible to tension the chains and once the cable is released, the anti-return block avoids slackening of the snow chains.

The cable is pulled manually by the user, up to the maximum tensioning and its end is hooked to an elastic element which in turn is hooked to the outer ring.

Use is also known of self-tensioning devices that provide a storage block disposed on the outer ring element. The storage block has inside it an elastic element that is extracted therefrom and hooked to the end of the cable passing through the anti-return device. The elastic element is then automatically recalled inside the storage block, carrying with it the cable and causing self-tensioning of the snow chains.

According to the prior art, the cable that passes through the anti-return device is generally made by means of a portion of chain, formed by a plurality of links, substantially elliptical in shape, linked to each other and arranged on substantially perpendicular planes. The anti-return device has a pawl pivoted on its body and a spring that urges the pawl against the cable and the body of the anti-return device. In this manner, during tensioning of the cable the edge of the links of said chain abuts against one end of the pawl and the pawl turns on the axis of the pivot allowing traction of the cable. The cable thus advances in the tensioning direction with a pitch equal to the length of two links of chain. In fact, since the links are disposed on perpendicular planes, there is one click of the pawl of the anti-return device each time two links of chain pass.

This system, **disclosed e.g. in US-5.082.039,** presents some drawbacks, due to the fact that correct tensioning of the snow chains cannot be achieved or is difficult. In fact, it can happen that once the point of maximum tensioning of the snow chain is reached, the end of the pawl is in an intermediate point between two links of the chain; consequently it is not possible to make the cable advance just enough to cause the next click of the pawl and therefore the snow chains are not sufficiently tensioned.

The problem is further aggravated when use is made of a self-tensioning device, which certainly exerts less tensioning force than that which can be exerted in manual tensioning.

This problem is solved in part by cables formed by twisted link chains in which the feeding pitch of the chain that passes through the anti-return device is reduced from two links to one; despite this, perfect tensioning of the snow chains is still not achieved since this feed pitch corresponding to a link of chain still proves too long.

US-5.056.574 describes an anti-skid device according to the preamble of claim 1.

US-5.056.206 describes a tire chain having an outer ring made of a cable of adjustable length.

The object of the invention is to eliminate said drawbacks by providing a cable for an anti-return device, particularly for anti-skid devices, that allows tensioning of the anti-skid device to be adjusted in an optimal manner and minimizes slackening thereof.

Another object of the invention is that of providing such a cable that is easy to make and therefore economical.

These objects are achieved in accordance with the invention with the characteristics listed in appended independent claim 1.

Preferred embodiments of the invention are apparent from the dependent claims.

The cable for an anti-return device, particularly for snow chains, according to the invention has a substantially flexible core from which a series of stop elements of limited longitudinal size radially protrudes. These stop elements are preferably conical in shape with an axially positioned through hole that enables them to be inserted in the flexible core, preferably consisting of a steel wire. The length of said stop elements is extremely short, advantageously around 9 mm, or preferably less.

For tensioning of the anti-skid device, the cable according to the invention is pulled in the tensioning direction after passing though the anti-return device. The shape of the stop elements of the cable according to the invention allows tensioning of the anti-skid device to be adjusted with extreme precision. In fact the cable according to the invention is fed in the tensioning direction causing clicks of a pawl of the anti-return device with a pitch equal to the length of the stop elements.

Since the length of the stop elements is extremely short, it follows that adjustment of tensioning of the anti-skid device can be done with extreme accuracy. Once the cable is released, the anti-skid device remains perfectly tensioned with a minimum slackening that is more or less equal to the length of the stop element.

Further characteristics of the invention will be made clearer by the detailed description that follows, referring to purely exemplary and therefore non-limiting embodiments thereof, illustrated in the appended drawings, in which:
Figure 1 is a side view, taken from the outer side of a wheel, on which is mounted an anti-skid device with a self-tensioning system comprising a cable, according to the invention, passing through an anti-return device;
Figure 2 is a side view, like Figure 1, showing an anti-skid device with a manual tensioning system comprising the cable according to the invention passing through the anti-return device;
Figure 3 is a plan view of the cable according to the invention engaged inside the anti-return device showing two possible terminal elements disposed at the ends of the cable, in particular for application to a self-tensioning system such as that shown in Figure 1;
Figure 4 is a plan view of the cable according to the invention, engaged inside the anti-return device, showing two other possible terminal elements disposed at the ends of the cable, particularly for application to a manual tensioning system such as that shown in Figure 2;
Figure 5 is a plan view of a cable according to a first embodiment of the invention;
Figure 6 is a plan view of a flexible core of the cable in Figure 5;
Figure 7a is a an axial sectional view of two stop elements of the cable in Figure 5;
Figure 7b is an axial sectional view of another two possible stop elements of the cable according to the invention, different from the stop elements shown in Figure 7a;
Figure 8 is a plan view showing a cable according to a second embodiment of the invention.

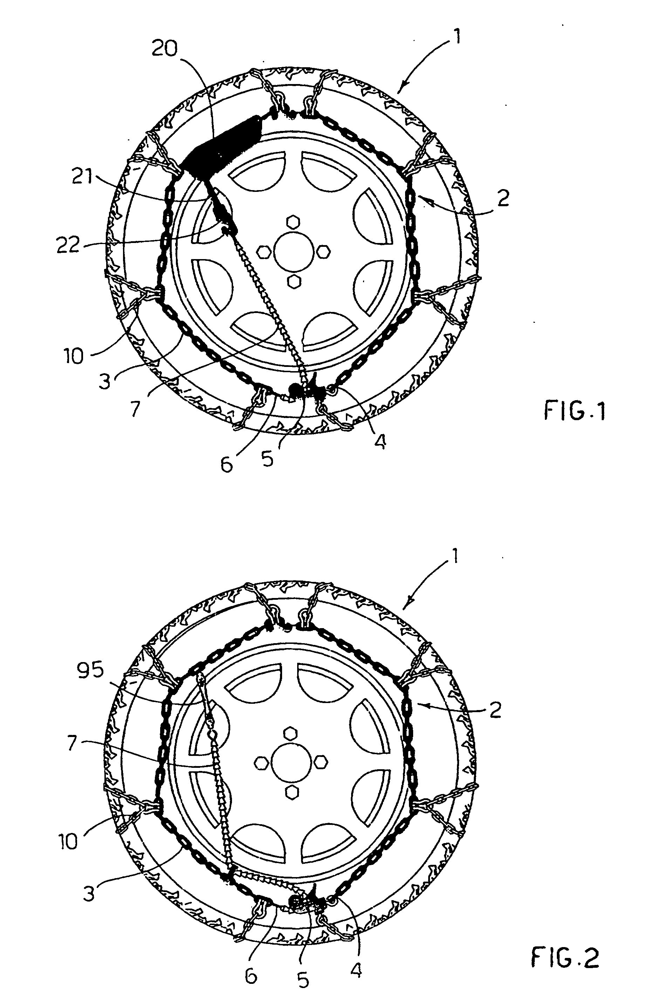

With reference to Figures 1 and 2, a wheel 1 of a vehicle on which is fitted an anti-skid device or snow chain, denoted as a whole with reference numeral 2, is shown. The anti-skid device 2 comprises an element (not visible) closed in a circle or ring on the inner side of the wheel 1, an element 3 disposed in a circle or ring on the outer part of the wheel and a series of portions of anti-skid chain 10, disposed transversally on the tread which bring about joining of the outer ring element and the inner one.

The outer ring 3 is hooked at one end to an anti-return device 5 and is connected at its other end 6 to a terminal portion consisting of a cable 7.

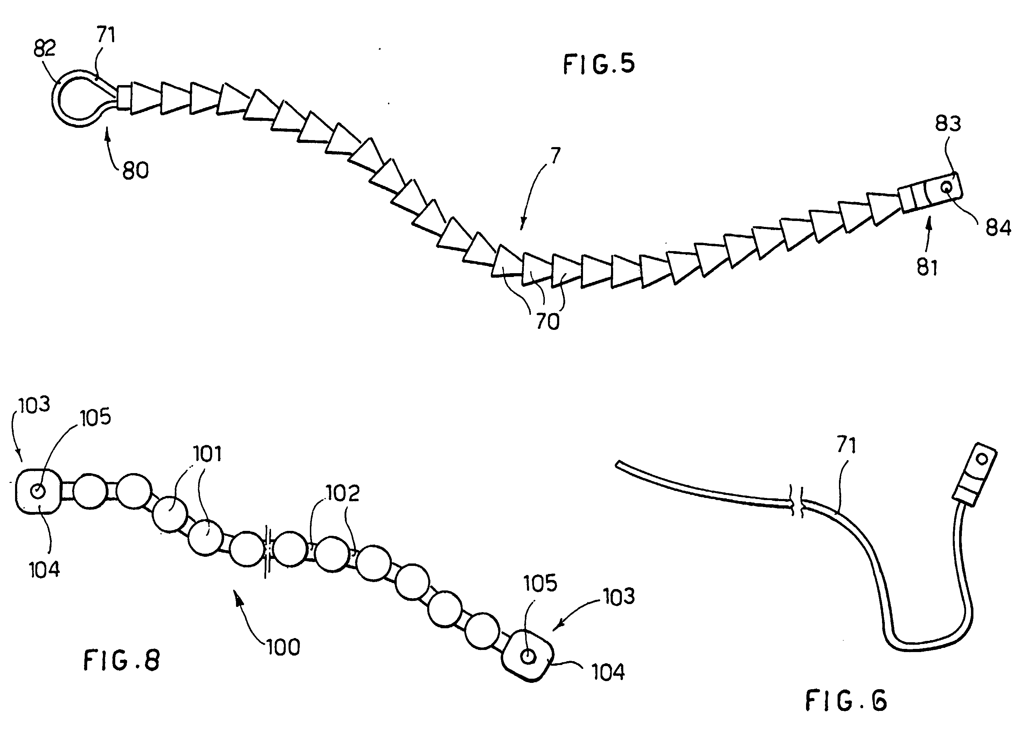

As better illustrated in Figure 5, the cable 7 comprises a plurality of stop elements 70. As shown in Figure 7a, the stop elements 70 are preferably substantially conical in shape with an axially positioned through hole 72. They have a very short length which can generally reach 9 mm or even less.

Clearly the stop elements 70 can be of a shape other than conical. For example, in Figure 7b spherical shaped stop elements 70 with an axial hole 72 are shown.

The stop elements 70 are inserted by means of their hole 72 on a flexible core 71 shown in Figure 6. The flexible core 71 is preferably a steel wire.

As shown in Figure 5, at the ends of the cable 7 two terminal elements 80 and 81 that can have various shapes and configurations are shown. The terminal element 80 is destined to engage with the end link 6 of the outer ring element 3 and the terminal element 81 is destined to engage with a chain tensioning device.

By way of example, in Figure 5 the terminal element 80 consists of a loop 82 formed by said flexible core 71 of the cable 7. The terminal element 81, on the other hand, consists of a plate 83 with a hole 84. Clearly the terminal elements 80 and 81 of the cable 7 can be of the same shape or different shapes from that those described, such as hook shapes or with inserts for snap coupling or the like.

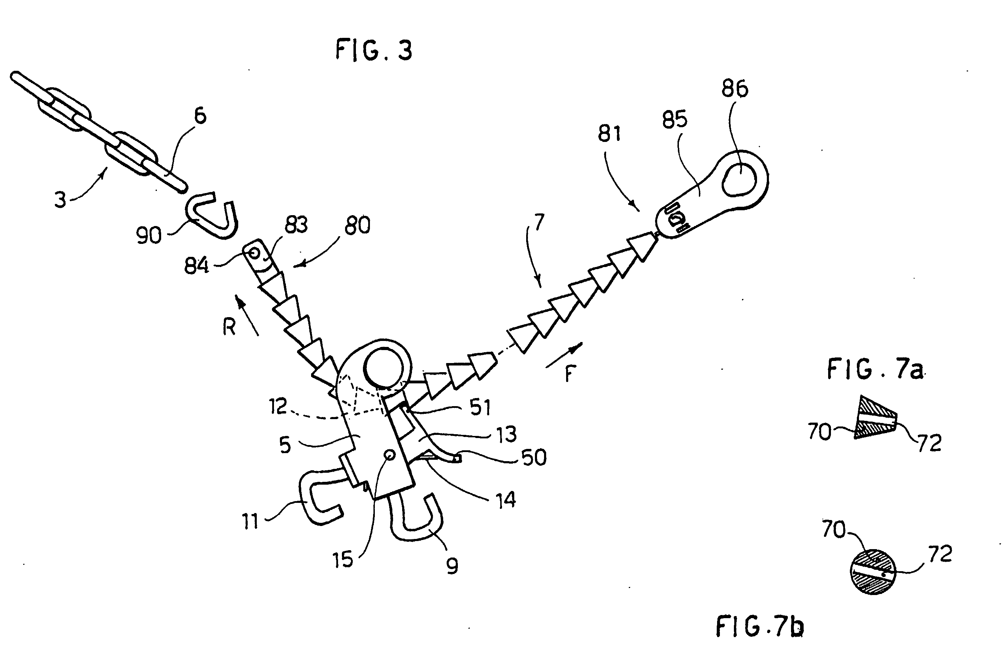

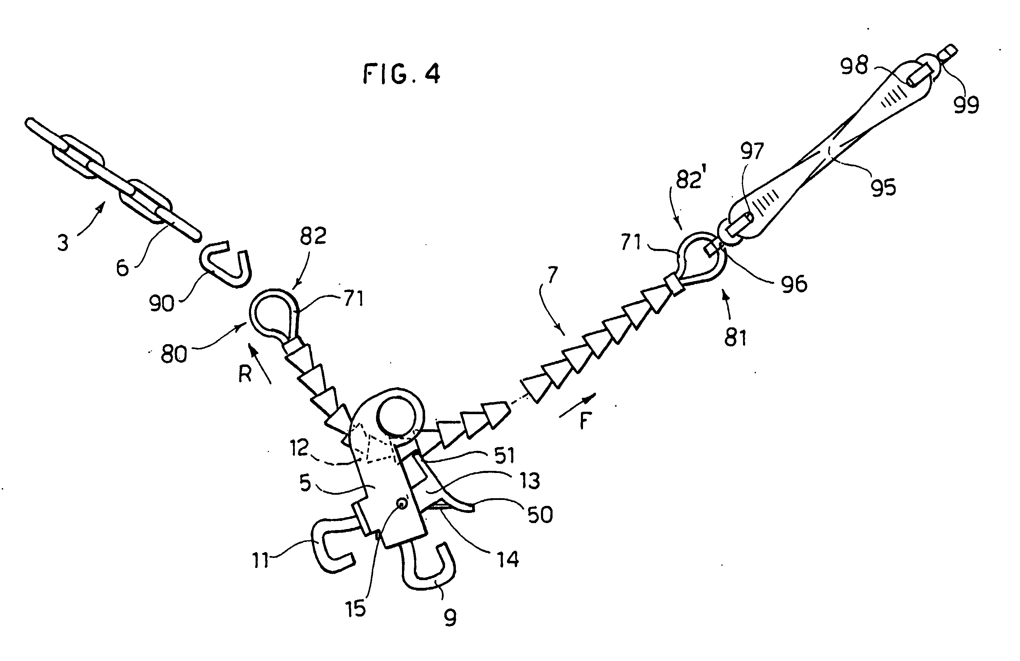

As better illustrated in Figures 3 and 4, the anti-return device 5 comprises a hook 9 for hooking to the end 4 of the outer ring element 3, a hook 11 for hooking to a portion of chain 10 and an opening 12 for passage of the cable 7. A stop pawl 13 is pivoted at 15 to the anti-return device 5. The pawl 13 is urged by a spring 14 so that it is pushed against a stop element 70 of the cable 7, acting as a ratchet.

In practice the cable 7 is allowed to slide in the direction of the arrow F, when traction is exerted in this direction, while sliding in the opposite direction indicated by the arrow R is prevented, and any slackening of the snow chain is thus prevented.

During traction in the direction of the arrow R, the cable 7 can slide with a pitch equal to the length of each stop element 7. In fact the inclined surface of each stop element 70 pushes the end 51 of the pawl 13 causing rotation thereof around the pivot 15 against the action of the spring 14. The pawl 13 therefore makes one click for each passage of a stop element 70.

If, on the other hand, there is traction in the direction of the arrow R, the largest base of a stop element 70 urges the end 51 of the pawl 13 against the body of the anti-return device 5 blocking it and thus preventing sliding of the cable 7 in the direction of the arrow R .

It is obvious that in this case once maximum traction of the cable 7 in the direction of the arrow F has been exerted, it can happen that the end 51 of the pawl 13 is in an intermediate position of a stop element 13. Consequently the length of travel of the cable 7 in the direction of the arrow F to have the next click of the pawl 13 can be equal to the length of a stop element 70 at most. For this reason the length of each stop element 70 is extremely short so as to allow an adjustment of the tensioning of the snow chain that is as accurate as possible and thus a consequent minimum slackening.

When the snow chain must be removed, it is sufficient to exert manual pressure on the end 50 of the pawl 13 opposite the end 51. Following this pressure, the pawl 13, turning around the pivot 15, disengages the corresponding stop element 70 of the cable 7. In this manner the cable 7 can then be pulled in the direction of the arrow R loosening the chain 2.

With specific reference to Figures 1 and 3, application of the cable 7 according to the invention to a self-tensioning system for snow chains will be described. A storage block 20 is mounted in the outer ring element 3. Said storage block 20 contains an elastic cable 21 terminating in a hook 22 destined to hook to the free end of the cable 7 which has a terminal element 81.

As shown in Figure 3, the terminal element 81 is formed by a plate element 85 with a hole 86 such as to be engaged by the hook 22. The other terminal element 80 is formed by a plate 83 with a hole 84. For connection of the terminal element 80 to the end link 6 of the inner ring element 3 an open link 90 of chain is provided that respectively engages the hole 84 and the end link 6, said link subsequently being closed.

With specific reference to Figures 2 and 4, application of the cable 7 according to the invention to a manual tensioning system for snow chains is described. In this case the cable 7 is tensioned manually by the user and is hooked by means of an elastic element 95 to a link of the outer ring element 3.

As shown in Figure 4, the two terminal elements 80 and 81 consist of two loops 82 and 82' each formed by means of the flexible core 71 of the cable 7. The cable 7 is connected to the end link 6 of the outer ring element 3 by means of an open chain link 90 which engages in the link 6 and in the loop 82, and is subsequently closed.

The elastic element 95 has at its two ends two holes 97 and 98 which receive two hooks 96 and 99 respectively. The hook 96 engages in the loop 82' of the terminal element 81 of the cable 7 and the hook 99 engages in a link of the closed ring element 3.

With reference to Figure 8, a second embodiment of a cable according to the invention is shown, indicated as a whole with reference numeral 100. The cable 100 is obtained by moulding of plastic material. The cable 100 comprises a plurality of substantially spherical stop elements 101, connected to one another by means of small substantially cylindrical bridges 102. The small bridges 102 have a certain flexibility in order to make the cable 100 flexible.

The bridges 102 have a smaller diameter than the diameter of the stop elements 101 so that the stop elements 101 can protrude with respect to the small bridges 102. In this manner the stop elements 101 can abut against the end 51 of the pawl 13 of the anti-return device 5 to stop sliding of the cable 7 in the slackening direction.

The length of the small bridges 102 and the diameter of the stop elements 101 are very small. In this manner, the feed pitch of the cable 100 through the anti-return device 5 is given by the length of the small bridge 102 summed with the diameter of the stop element 101.

As shown in Figure 8, the cable 100 provides at its two ends two terminal elements 103, each consisting of a plate 104 with a hole 105. The terminal elements 103 are obtained together with the cable 100 by moulding.

Numerous modifications or changes of detail within the reach of a skilled in the field can be made to the present embodiments of the invention, still remaining within the scope of the invention expressed by the appended claims.

## Claims

1. An anti-skid device (2) comprising an element (3) that can be closed in a ring, able to be placed on the outer side of a wheel (1), an inner element that can be closed in a ring able to be placed on the inner side of the wheel (1), said inner and outer ring elements (3) being joined by variously composed elements achieving friction on the tread, said outer element (3) having a terminal portion able to be pulled to bring said anti-skid device (2) under tension, upon passage in said anti-return device (5) **said terminal portion is a cable (7, 100) comprising a** flexible core (71; 102) from which a series of stop elements (70; 101) protrudes radially, said stop elements being of limited longitudinal size so as to a have an accurate adjustment of tensioning of said anti-skid device (2), **characterized in that** said anti-return device allows sliding of said **terminal portion** only in the direction of tensioning of said anti-skid device (2) and not in the opposite direction of slackening.

2. **An anti-skid device** according to claim 1, **characterized in that** the longitudinal size of said stop elements (70;101) is about 9 mm or less.

3. **An anti-skid device** according to claim 1 or 2, **characterized in that** said stop elements (70) are substantially conical in shape.

4. **An anti-skid device** according to claim 1 or 2, **characterized in that** said stop elements (70; 101) are substantially spherical in shape.

5. **An anti-skid device** according to any one of the previous claims, **characterized in that** said stop elements (70) have a through hole (72) disposed axially, by means of which they can be inserted on a flexible core (71).

6. **An anti-skid device** according to claim 5, **characterized in that** said flexible core (71) consists of a steel wire.

7. **An anti-skid device** according to any one of claims 1 to 4, **characterized in that said cable (100)** is obtained by moulding of plastic materials.

8. **An anti-skid device** according to claim 7, **characterized in that said cable (100)** comprises a plurality of substantially spherical stop elements (101), connected to one another by means of a plurality of substantially cylindrical small bridges (102).

9. **An anti-skid device** according to any one of the preceding claims, **characterized in that** at its two ends **said cable (7, 100)** has two respective terminal elements (80, 81; 103) able to receive engagement means (90, 22, 96) for connection respectively to a chain link (6) of said anti-skid device (2) and to a tensioning or self-tensioning device (20, 95) of said anti-skid device (2).

10. **An anti-skid device** according to claim 9, **characterized in that** at least one of said terminal elements (80, 81) consists of a loop (82) formed by the flexible core (71) of said cable (7).

11. **An anti-skid device** according to any one of claims 1 to 9, **characterized in that** at least one of said terminal elements (80, 81; 103) consists of a plate or a buckle (83, 85; 104) having a hole (84, 86; 105).

## Patentansprüche

1. Eine Rutschsicherung (2), einschließlich eines zu einem Ring schließbaren und auf der Außenseite eines Rades (1) positionierbaren Elements (3), eines zu einem Ring schließbaren, auf der Innenseite des Rades (1) positionierbaren inneren Elements, wobei diese inneren und äußeren Ringelemente (3) durch unterschiedlich aufgebaute Elemente verbunden sind und eine Reibung auf das Reifenprofil ausüben, das genante äußere Element (3) über einen Endbereich verfügt, an dem gezogen werden kann, um beim Durchlaufen der genannten Rücklaufsicherung (5) die Rutschsicherung (2) zu spannen, wobei der genannte Endbereich ein Kabel (7, 100) ist, der einen flexiblen Kern (71; 102) umfasst, von dem eine Reihe von Stoppelementen (70, 101) radial hervorstehen, wobei die genannten Stoppelemente eine begrenzte Größe in der Längsrichtung besitzen, so dass eine genaue Einstellung der Spannung der genannten Rutschsicherung (2) erfolgen kann, **dadurch gekennzeichnet, dass** die genannte Rücklaufsicherung ein Gleiten des genannten Endbereichs nur in der Richtung zum Spannen der Rutschsicherung (2) und nicht entgegengesetzt zum Lockern ermöglicht.

2. Eine Rutschsicherung gemäß Anspruch 1, **dadurch gekennzeichnet, dass** die Größe der genannten Stoppelemente (70, 101) in der Längsrichtung höchstens 9 mm beträgt.

3. Eine Rutschsicherung gemäß Anspruch 1 oder 2, **dadurch gekennzeichnet, dass** die genannten Stoppelemente (70) im Wesentlichen eine konische Form besitzen.

4. Eine Rutschsicherung gemäß Anspruch 1 oder 2, **dadurch gekennzeichnet, dass** die genannten Stoppelemente (70, 101) im Wesentlichen eine Kugelform besitzen.

5. Eine Rutschsicherung gemäß einem der vorstehenden Ansprüche, **dadurch gekennzeichnet, dass** die genannten Stoppelemente (70) eine axial angeordnete Durchgangsbohrung (72) aufweisen, mittels der sie auf einen flexiblen Kern (71) aufgefädelt werden können.

6. Eine Rutschsicherung gemäß Anspruch 5, **dadurch gekennzeichnet, dass** der genannten flexible Kern (71) aus einem Stahlseil besteht.

7. Eine Rutschsicherung gemäß einem der Ansprüche 1 bis 4, **dadurch gekennzeichnet, dass** dieses Kabel (100) durch das Formen von Kunststoff hergestellt wird.

8. Eine Rutschsicherung gemäß Anspruch 7, **dadurch gekennzeichnet, dass** das genannte Kabel (100) eine Vielzahl von im Wesentlichen kugelförmigen Stoppelementen (101) aufweist, die miteinander durch eine Vielzahl kleiner, im Wesentlichen zylinderförmiger Brücken (102) verbunden sind.

9. Eine Rutschsicherung gemäß einem der vorstehenden Ansprüche, **dadurch gekennzeichnet, dass** das genannte Kabel (7, 100) an seinen beiden Enden jeweils ein Endelement (80, 81, 103) aufweist, das Kupplungsstücken (90, 22, 96) zur Verbindung mit einem Kettenglied (6) der genannten Rutschsicherung (2) sowie mit einer Spann- oder Selbstspannvorrichtung (20, 95) dieser Rutschsicherung (2) aufnehmen kann.

10. Eine Rutschsicherung gemäß Anspruch 9, die **dadurch gekennzeichnet ist, dass** mindestens eines der genannten Endelemente (80, 81) aus einer Schlaufe (82) besteht, die aus dem flexiblen Kern (71) des genannten Kabels (7) gebildet wird.

11. Eine Rutschsicherung gemäß allen Ansprüchen 1 bis 9, die **dadurch gekennzeichnet ist, dass** mindestens eines der genannten Endelemente (80, 81, 103) aus einer Platte oder einer Schnalle (83, 85, 104) mit einem Loch (84, 86, 105) besteht.

## Revendications

1. Dispositif antiglisse (2) comprenant un élément (3) qui peut être fermé en boucle, en mesure d'être placé sur la surface extérieure d'une roue (1), un élément interieur pouvant être fermé en boucle en mesure d'être placé sur la surface intérieure de la roue (1), lesdits éléments de la boucle intérieure et extérieure (3) étant reliés par des éléments aux différentes compositions arrivant au frottement sur la bande de roulement, ledit élément extérieur (3) présentant une portion terminale en mesure d'être poussée pour mettre ledit dispositif antiretour (2) en tension, au passage dans ledit dispositif antiretour (5), ladite portion terminale est un câble (7, 100) comprenant un noyau flexible (71; 102) d'où une série d'éléments d'arrêt (70; 101) sort en saillie dans le sens radial, lesdits éléments d'arrêt ayant une dimension longitudinale limitée de façon à obtenir un réglage précis de la mise en tension dudit dispositif antiglisse (2), **caractérisé en ce que** ledit dispositif antiglisse permet le coulissement de ladite portion terminale uniquement dans le sens de la mise en tension dudit dispositif antiglisse (2) et non pas dans le sens opposé de relâchement.

2. Dispositif antiglisse selon la revendication 1, **caractérisé en ce que** la dimension longitudinale desdits éléments d'arrêt (70 ; 101) est d'environ 9 mm ou moins.

3. Dispositif antiglisse selon la revendication 1 ou 2, **caractérisé en ce que** lesdits éléments d'arrêt (70) ont une forme substantiellement conique.

4. Dispositif antiglisse selon la revendication 1 ou 2, **caractérisé en ce que** lesdits éléments d'arrêt (70 ; 101) ont une forme substantiellement sphérique.

5. Dispositif antiglisse selon une revendication quelconque parmi les revendications susmentionnées, **caractérisé en ce que** lesdits éléments d'arrêt (70) présentent un orifice de passage (72) placé dans le sens axial, au moyen duquel ils peuvent être introduits dans un noyau flexible (71).

6. Dispositif antiglisse selon la revendication 5, **caractérisé en ce que** ledit noyau flexible (71) est un câble en acier.

7. Dispositif antiglisse selon une revendication quelconque parmi les revendications susmentionnées allant de 1 à 4, **caractérisé en ce que** ledit câble (100) est obtenu par moulage de matières plastiques.

8. Dispositif antiglisse selon la revendication 7, **caractérisé en ce que** ledit câble (100) comprend une pluralité d'éléments d'arrêt substantiellement sphériques (101), reliés entre eux au moyen d'une pluralité de petits ponts substantiellement cylindriques (102).

9. Dispositif antiglisse selon une revendication quelconque parmi les revendications susmentionnées, **caractérisé en ce qu'**au niveau de ses deux extrémités, ledit câble (7, 100) présente deux éléments terminaux respectifs (80, 81; 103) en mesure d'accueillir des dispositifs d'engagement (90, 22, 96) pour se relier respectivement à un raccord de chaîne (6) dudit dispositif antiglisse (2) et à un dispositif de mise en tension ou de mise en tension automatique (20, 95) dudit dispositif antiglisse (2).

10. Dispositif antiglisse selon la revendication 9, **caractérisé en ce qu'**au moins un desdits éléments terminaux (80, 81) est une boucle (82) réalisée par le noyau flexible (71) dudit câble (7).

11. Dispositif antiglisse selon une revendication quelconque parmi les revendications susmentionnées allant de 1 à 9, **caractérisé en ce qu'**au moins un desdits éléments terminaux (80, 81 ; 103) est une plaque ou une boucle (83, 85 ; 104) présentant un orifice (84, 86 ; 105).
